# EUROPEAN PATENT APPLICATION

(11) **EP 2 537 699 A1**
(43) Date of publication of application: **26.12.2012**
(21) Application number: 11170872.3
(22) Date of filing: 22.06.2011
(51) Int. Cl.: B60K 35/00, G01C 21/26

(54) **User interface system for actuation of an action associated with an vehicle anomaly**

(71) Applicant: Volvo Car Corporation, 40 531 Göteborg (SE)
(72) Inventor: Lindgren, Thomas, 31058 Vessigebro (SE); Gordh, Mikael, 44250 Ytterby (SE); Agardh, Johannes, 43893 Landvetter (SE); Fagerström, Martin, 41763 Göteborg (SE)

(57) **Abstract**

The present invention relates to a user interface system (1) for allowing a user of a vehicle to actuate an action associated with an anomaly of the vehicle, which user interface system comprises a display unit (2) integrated with an instrument panel (3) of the vehicle. The display unit is arranged to display a predetermined vehicle message (6) as a result of an occurrence of the anomaly, and a plurality of predetermined selectable action options (7) related to the vehicle message, each action option being associated with a respective action. The user interface system further comprises a control unit (4) arranged to provide the user with the ability to make a selection (9) of one of the action options, wherein, as a result of detection of the selection, the action associated with the selected action option is actuated.

The invention also relates to a corresponding method (S201-S245) and a computer program (20) comprising software instructions that, when executed, performs said method.

With the presented user interface system, a solution enabling for the user to in a convenient way confront the anomaly in a plurality of manners, is provided.

## Description

### Technical Field

The present invention relates to a user interface system for allowing a user of a vehicle to actuate an action associated with an anomaly of the vehicle.

### Background Art

Vehicles may run without incidents for thousands and thousands of miles. Sooner or later, however, anomalies related to the vehicle are likely to occur. Vehicle malfunctions may for instance occur in the pressure of engine oil or a charging system or the like, whereby the driver instantly needs to be informed. Traditionally, when a vehicle anomaly occurs, a vehicle message such as a warning lamp or warning message is displayed in the vehicle instrument cluster. However, a driver who is unfamiliar with such a warning lamp may be incapable of pinpointing what is faulty or poorly maintained, and it may be difficult to judge the severity of the anomaly and how to act. More information regarding the problem is sometimes explained in the owner's or service manual, but it may be difficult to find where in the manual the problem and solution is described.

In order to alleviate these difficulties, US 2008/0316009 suggests a solution with a warning lamp on a meter panel lighting up or flashing in correspondence with the occurrence of a vehicle anomaly. The driver is swiftly informed of the description of the content of the warning and of coping strategies. Additionally, the driver may select to see the warning lamp information by means of performing a predetermined action, such as for instance tapping on an icon. Accordingly, the driver may be visually informed of the content of a warning in an interactive and efficient manner. Although US 2008/0316009 makes it unnecessary for the driver to spend time and effort confronting the service manual, however, there is still room for improvement with regards to enhancement of user-friendliness should a vehicle anomaly occur.

### Summary of the Invention

According to the invention, the above need is at least partly met by a user interface system for allowing a user of a vehicle to actuate an action associated with an anomaly of the vehicle, which user interface system comprises a display unit integrated with an instrument panel of the vehicle. The display unit is arranged to display a predetermined vehicle message as a result of an occurrence of the anomaly, and a plurality of predetermined selectable action options related to the vehicle message, each action option being associated with a respective action. The user interface system further comprises a control unit arranged to provide the user with the ability to make a selection of one of the action options, wherein, as a result of detection of the selection, the action associated with the selected action option is actuated.

In presenting such a user interface system, a solution enabling for the user to in a convenient way confront the anomaly in a plurality of manners, is provided.

The user referred to is preferably the driver, whereas the referred to vehicle may be any arbitrary vehicle, such as a for instance a car, truck or bus provided with a display unit integrated with an instrument panel of the vehicle. The display unit may be a display specifically provided for the implementation of the suggested user interface system provided in front of the driver, or a commonly known display already available in the vehicle; for instance a dashboard display, a display of the driver information module, a cluster display etc. By integrating the display unit with the instrument panel, information to be displayed to the driver may be shown in a user-friendly manner. Even when confronted with information requiring the attention of the driver, he or she can maintain his or her gaze in a forward direction.

In order to inform the user of an occurrence of a vehicle anomaly, the display unit is arranged to display a predetermined vehicle message as a result of such an occurrence. Accordingly, the user is prompted with a vehicle message, for instance a warning lamp, symbol and/or message indicating the type of anomaly that has occurred. An anomaly may for instance relate to malfunction of the engine, electrical failure, or low level of washer fluid etc.

Additionally, the display unit is arranged to display a plurality of predetermined selectable action options related to the vehicle message, each action option being associated with a respective action. Thereby, the user is prompted with a plurality of available action options, i.e. choices, offering additional help in a variety of manners with regards to the occurred anomaly. The action options, for instance provided as shortcuts, links or menu options, may be arbitrarily arranged when displayed in the display unit; preferred, however, is arranging them in a list. Thereby, the action options are presented to the user in a clearly viewable manner. Should more action options than fit into view be available, may stepping around among the action options result in further action options being visible and former being hidden. In general, the vehicle message and/or action options may be displayed in the display unit for an arbitrary period of time. According to one example, the action options are displayed for a predetermined limited time. Thereby, the available action options will automatically vanish should the user not select an action option within the set limited time. Such a limited time may for instance range from 1 second up to minutes, hours and even days, depending on for instance the preferences of the designer or the severity of the anomaly related to the vehicle message. According to yet another example, the user may bring up vanished action options to view again. Alternatively and/or additionally, the user may actively select to close down the view of the available selectable action options.

The referred to respective actions may for instance be represented by: displaying additional content related to the anomaly and/or vehicle message, initiating route guidance to a service center or gas station, displaying a phone number to the service center or to an assistance call center, or automatically calling the service center or assistance call center. The corresponding action options may then be represented by for instance the text strings "Read more?", "Navigate to a service center / gas station?", "Display phone number to a service center / gas station / assistance call center?", and/or "Call a service center / gas station / assistance call center?". The action options may additionally or alternatively comprise icons and/or symbols further clarifying the essence of the different available actions.

The referred to control unit is arranged to provide the user with the ability to make a selection of one of the action options. Thereby, the ability is provided for the user to select one of the action options suitable for the traffic situation at hand, or in accordance with his or her personal preferences. The control unit may be represented by any arbitrary means enabling the user to select among the available action options, for instance one or several wheels, buttons or knobs, by which e.g. the driver may indicate his or her selected choice.

Furthermore, as a result of detection of the selection, the action associated with the selected action option is actuated. Accordingly, by detection of the selection and subsequently actuation of the preferred action, a user-friendly manner of confronting the occurred anomaly is provided. The user, i.e. preferably the driver, is provided with the ability to in an interactive manner select and subsequently activate a preferred option among a plurality of options to face the anomaly. For instance, rather than confronting the paper version of the vehicle service manual, the user is provided with the ability to in a simple and quick manner be prompted with additional content related to the anomaly and/or vehicle message, be guided to a service center or gas station, be prompted with a phone number to the service center or to an assistance call center, and/or have a call automatically placed to a service center or assistance call center. The actuation is for instance supported by a software function, with a signal comprising the detected selected action option as input, and activation of the corresponding action as output.

According to an embodiment, the user interface system further comprises a first storage device having stored thereon predetermined additional content associated with the vehicle message, wherein one of the respective actions comprises at least retrieving the additional content from the first storage device, and displaying the additional content in the display unit. Thereby, the user is provided with a choice to in an interactive manner gain more information related to the occurred anomaly and/or displayed vehicle message. The additional content may comprise text further explaining the anomaly, vehicle message and/or selected action option, or a phone number to for instance a service center or an assistance call center. The additional content may, if preferred by the designer, be displayed in a pop-up window. Thereby, a feasible implementation is suggested, enabling the view of the additional content to be adapted to characteristics chosen by the designer to greater extent. Animations and images may be utilized in combination with describing text to provide the user with a more pedagogic explanation of the additional content, action option, vehicle message, and/or anomaly. Furthermore, the first storage device may be arranged locally within the vehicle or be provided remotely on e.g. a server to which the vehicle is able to connect. In one example, the predetermined additional content may be updated locally and/or remotely.

According to another embodiment, the first storage device comprises an interactive vehicle manual or a phone book associated with the vehicle, wherein one of the respective actions further comprises deriving the additional content from the interactive vehicle manual or the phone book. Thereby, the additional content may be in line with, and/or be updated in line with, the former and/or the latter.

According to one embodiment, the user interface system further comprises an identifying device, wherein one of the respective actions comprises at least identifying, by the identifying device, a geographical position of the vehicle, and identifying, by the identifying device, a vehicle servicing entity based on a distance to the vehicle position as compared to respective distances of possible alternative vehicle servicing entities. Thereby, one or several servicing entities within relatively close proximity of the vehicle may be identified, such as a for instance a service center or gas station.

According to yet another embodiment, the user interface system further comprises a navigation system associated with the vehicle, wherein one of the respective actions further comprises at least initiating route guidance to the servicing entity by means of the navigation system. Thereby, the user may choose to be automatically guided to for instance a vehicle service center or gas station, without having to manually look up the servicing entity and/or entering the address in the navigation system. According to one example, the identifying device comprises the navigation system. Thereby, the servicing entity may be identified by for instance a P.O.I. (point of interest) defined in the navigation system.

According to an alternative embodiment, one of the respective actions further comprises at least displaying a servicing phone number associated with the servicing entity in the display unit. Thereby, rather than initiating route guidance to the servicing entity, a phone number associated therewith is provided to the user, whereby he or she may choose to make a call at his or her own discretion. The servicing phone number may be identified and retrieved based on identification of the servicing entity. Furthermore, the servicing phone number may, if preferred by the designer, be displayed in a pop-up window.

According to another embodiment, the user interface system further comprises a phone associated with the vehicle, wherein one of the respective actions further comprises at least initiating a call to the servicing entity by means of the phone. Thereby, a phone call may be automatically placed to the identified servicing entity, without the user having to look up and/or dial the number. The phone may be represented by any arbitrary phone capable of being associated with the vehicle, such as for instance a physically integrated phone, or a mobile phone connected to the vehicle by means of for instance cable, IR or Bluetooth.

According to one embodiment, the user interface system further comprises a second storage device having stored thereon an assisting phone number of a predetermined vehicle assisting entity, wherein one of the respective actions comprises at least retrieving the assisting phone number from the second storage device. Thereby, the user may choose to contact an assisting entity such as an assisting call center. The second storage device may be arranged locally within the vehicle or be provided remotely on e.g. a server to which the vehicle is able to connect. The second storage device may furthermore be the same as, or comprised in, the first storage device. In one example, the assisting phone number may be updated locally and/or remotely.

According to another embodiment, the second storage device comprises an interactive vehicle manual or a phone book associated with the vehicle, wherein one of the respective actions further comprises deriving the assisting phone number from the interactive vehicle manual or the phone book. Thereby, the assisting phone number may be in line with, and/or be updated in line with, the former and/or the latter.

According to yet another embodiment, one of the respective actions further comprises at least displaying the assisting phone number in the display unit. Thereby, a phone number associated with the assisting entity is provided to the user, whereby he or she may choose to make a call at his or her own discretion. The assisting phone number may for instance be displayed in a pop-up window.

According to one embodiment, the user interface system further comprises a phone associated with the vehicle, wherein one of the respective actions further comprises at least initiating a call to the assisting entity by means of the phone. Thereby, a phone call is automatically placed to the identified assisting entity, without the user having to look up and/or dial the number.

Generally, the control unit may be provided at an arbitrary position within the vehicle, such as on the instrument panel or on a steering wheel lever. According to one embodiment, however, the control unit is integrated in a steering wheel of the vehicle. Thereby, the control unit is conveniently placed in front of the user, preferably the driver, easily reachable. A novel control unit or steering wheel controls already available in the vehicle enabling the user to select his or her choice of action option may be utilized.

Furthermore, in general, the vehicle message and/or action options may be visually displayed in the display unit in an arbitrary manner; separately or combined. One or several sections of the display unit may - at least temporarily - be dedicated to visually display the vehicle message and/or action options. According to one embodiment, the vehicle message and/or the action options are displayed in at least one pop-up window. Thereby, a feasible implementation is suggested, enabling the view of the vehicle message and/or the action options to be adapted to characteristics chosen by the designer to greater extent. Animations and images may be utilized in combination with describing text to provide the user with a more pedagogic explanation of the different actions, action options, the vehicle message, and/or the anomaly. The vehicle message is for instance provided in a first pop-up window and the action options in a second pop-up window. Alternatively, the vehicle message and the action options may be provided in one and the same pop-up window. In another example, only the action options are displayed in a pop-up window.

According to a second aspect of the invention, there is provided a method for a user interface system allowing a user of a vehicle to actuate an action associated with an anomaly of the vehicle, which user interface system comprises a display unit integrated with an instrument panel of the vehicle, and a control unit. The method comprises the steps of: displaying, as a result of an occurrence of the anomaly, a predetermined vehicle message in the display unit; displaying a plurality of predetermined selectable action options related to the vehicle message in the display unit, each action option being associated with a respective action; detecting, by means of the control unit, a selection initiated by the user of one of the action options; and actuating the action associated with the selected action option.

According to a third aspect of the invention, there is provided a computer program comprising software instructions that, when executed, performs the method of the above mentioned second aspect of the invention.

The second and third aspects of the invention provide similar advantages as discussed above in relation to the first aspect of the invention.

Other aspects, benefits and advantageous features of the present invention will be apparent from the following description and claims.

### Brief Description of the Drawings

The various aspects of the invention, including its particular features and advantages, will be readily understood from the following detailed description and the accompanying drawings, in which:
Fig. 1 illustrates an exemplifying user interface system in accordance with a preferred embodiment of the present invention; and
Fig. 2 is a flow chart reflecting exemplifying steps of a method for the user interface system of Fig. 1.

### Detailed Description of the Preferred Embodiments of the Invention

The present invention will now be described more fully hereinafter with reference to the accompanying drawings, in which the currently preferred embodiment of the invention is shown. This invention may, however, be embodied in many different forms and should not be construed as limited to the embodiment set forth herein; rather, the embodiment is provided for thoroughness and completeness, and fully convey the scope of the invention to the skilled addressee.

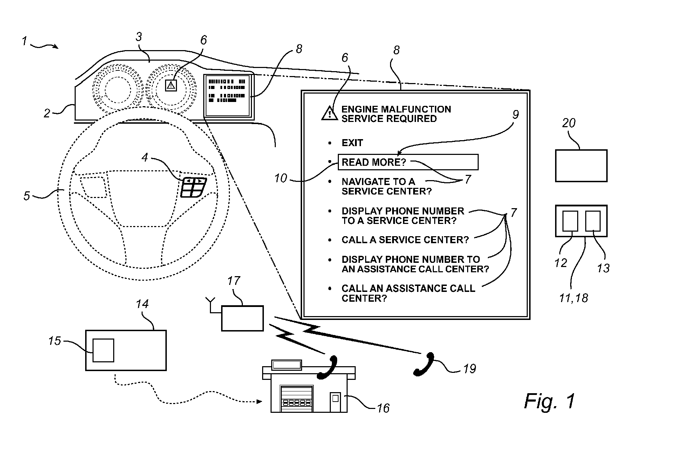

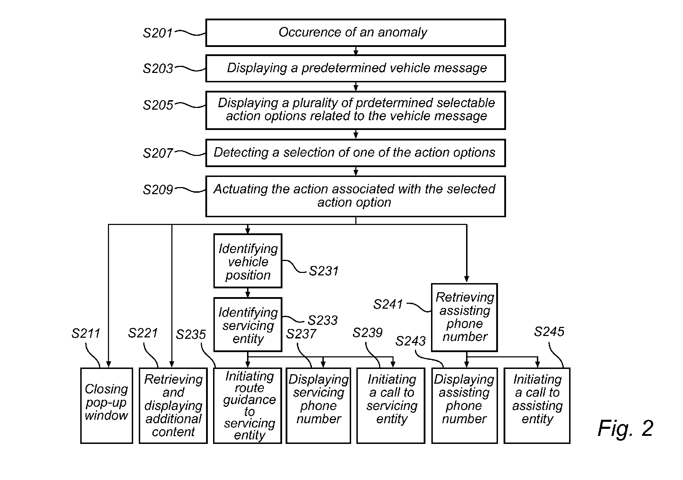

Referring now to Fig.1 in combination with Fig. 2, there is provided an exemplifying user interface system 1 in accordance with a preferred embodiment of the present invention, and a flow chart reflecting exemplifying steps of a method for the user interface system 1.

The shown user interface system 1 is provided for allowing a user of a vehicle to actuate an action associated with an anomaly of the vehicle. The vehicle is here represented by a car, and the anomaly of the shown embodiment concern engine malfunction. In the context of this application, the user is synonymous with a driver of the vehicle; it should be noted, however, that the user may be represented by any arbitrary person.

The user interface system 1 comprises a display unit 2 integrated with an instrument panel 3 of the vehicle. Here, the display unit 2 is represented by a commonly known cluster display positioned in front of a potential driver. The display unit 2 is arranged to display a predetermined vehicle message 6, here a warning triangle, as a result of an occurrence of the anomaly, here the engine malfunction. The user interface 1 furthermore comprises a control unit 4 integrated in a steering wheel 5 of the vehicle, and the control unit 4 is here represented by commonly known steering wheel control buttons.

In the shown embodiment, the user interface system 1 furthermore comprises a first storage device 11, having stored thereon predetermined additional content associated with the vehicle message 6. The storage device 11 is here arranged locally within the vehicle; note however, that according to alternative embodiments, the first storage device 11 may be arranged remotely on e.g. a server to which the vehicle is able to connect. The first storage device 11 comprises an interactive vehicle manual 12 and a phone book 13 associated with the vehicle. The user interface system 1 furthermore comprises an identifying device 14. Here, the identifying device 14 comprises a navigation system 15 associated with the vehicle. Additionally, the user interface system 1 comprises a phone 17 associated with the vehicle. Furthermore, the user interface 1 comprises a second storage device 18, having stored thereon an assisting phone number of a predetermined vehicle assisting entity 19. Here, the second storage device 18 is the same as the first storage device 11; note, however, that according to alternative embodiments, the first 11 and the second storage device 18 may be separate.

In use, the user interface system 1 provides the driver with the ability to actuate an action associated with an anomaly of the vehicle. In a first step S201, there is an occurrence of an anomaly. As a result of the occurrence of the anomaly, the predetermined vehicle message 6 is, in step S203, displayed in the display unit 2. That is, as the anomaly in the shown embodiment concern engine malfunction, the corresponding warning triangle 6 is displayed.

Furthermore, a plurality of predetermined selectable action options 7 related to the vehicle message 6 are, in step S205, displayed in the display unit 2. Thereby, the driver is prompted with a plurality of available action options 7, i.e. choices, offering additional help in a variety of manners with regards to the occurred anomaly. Here, the action options 7 are displayed in a list in a pop-up window 8, which may be arbitrarily arranged in the display unit 2. The action options 7 are represented by the text strings: "Exit?", "Read more?", "Navigate to a service center?", "Display phone number to a service center?", "Call a service center?", "Display phone number to an assistance call center?", and "Call an assistance call center?". The action options 7 additionally comprise respective icons further clarifying the essence of the different selectable actions. Each of the action options 7 is associated with a respective action, which will be explained in further detail in the following.

Presented with the selectable action options 7, the driver is given the ability to choose between actuation of different options. In the shown embodiment, the driver is set out to learn more about the occurred anomaly, i.e. the engine malfunction, and the displayed vehicle message 6, i.e. the warning triangle, why he or she by means of the control unit 4 selects the action option associated therewith: "Read more?". Thereby, a selection 9 initiated by the driver of one of the action options 7 is, in step 207, detected by the control unit 4. The selected action option 9 is preferably emphasized in order to indicate the selection 9 in a clear manner. In the shown embodiment, the selected action option 9 is emphasized by being encircled 10.

In step S209, as a result of detection of the selection 9, an action associated with the selected action option 9, is actuated. Accordingly, since the action option "Read more?" 9 was selected, in step S221, retrieving the additional content from the first storage device 11 and displaying the additional content in the display unit 2, is actuated. Accordingly, rather than having to confront the paper version of the vehicle service manual, the driver is - in a simple and quick manner - prompted with additional content related to the anomaly and warning message 6. Here, the additional content is derived from the interactive vehicle manual 12, and comprises further describing text. The additional content may be displayed in a pop-up window, e.g. the same pop-up window 8 previously or simultaneously displaying the available action options 7.

As an alternative to choosing the action option "Read more?" 9, the driver would have had the opportunity to instead select the action option "Exit". Thereby, the pop-up window 8 displaying the available selectable action options 7 would, in step S21, have vanished from the display unit 2.

Furthermore, the driver would have had the opportunity to alternatively select the action option "Navigate to a service center?". Should that have been the selected choice, an action associated wherewith would have been actuated, namely identifying, in step S231, by the identifying device 14, a geographical position of the vehicle and, identifying, in step S233, by the identifying device 14, a vehicle servicing entity 16 based on a distance to the vehicle position as compared to respective distances of possible alternative vehicle servicing entities. The servicing entity 16 is for instance identified by one or several P.O.I. (point of interest) by means of the navigation system 15. Additionally, said action would have further comprised initiating, in step S235, route guidance to the servicing entity 16 by means of the navigation system 15. Thereby, the driver would have been navigated to for instance the closest Volvo Service 16, or a gas station 16.

Alternatively, the driver would have had the opportunity to select the action option "Display phone number to a service center?". With such a selection, said action would have further comprised displaying, in step S237, a servicing phone number associated with the servicing entity 16 in the display unit 2. Accordingly, a phone number to for instance the closest "Volvo Service" 16, or gas station 16, would have been displayed to the driver for him or her to make a call at his or her own discretion.

According to yet another alternative, the driver would have had the opportunity to select the action option "Call a service center?". Should that have been the case, said action would have further comprised initiating, in step S239, a call to the servicing entity 16 by means of the phone 17. Thereby, a phone call would have been automatically placed to the closest "Volvo Service" 16, or gas station 16, without the driver having to look up and/or dial the number.

Furthermore, the driver could alternatively have chosen to turn to the assisting entity 19 for help. That is, he or she would have had the choice to alternatively select the action option "Display phone number to an assistance call center?", whereby the action associated therewith would have been actuated, namely retrieving, in step S241, the assisting phone number from the second storage device 18. Here, the assisting phone number is derived from the phone book 13. Additionally, said action would have further comprised displaying, in step S243, the assisting phone number in the display unit 2. Thereby, a phone number to for instance "Volvo Assist" 19 would have been displayed to the driver for him or her to make a call at his or her own discretion. The assisting phone number may be displayed in a pop-up window, e.g. the same pop-up window 8 previously or simultaneously displaying the available action options 7.

Alternatively, the driver would have had the opportunity to select the action option "Call an assistance call center?". With such a selection, said action would have further comprised initiating, in step S245, a call to the assisting entity 19 by means of the phone 17. Thereby, a phone call would have been automatically placed to for instance "Volvo Assist" 19, without the driver having to look up and/or dial the number.

Actuation of the above mentioned actions is for instance supported by a software function, with a signal comprising the detected selection 9 of one of the action options 7 as input, and activation of the corresponding action as output. Such a software function may, along with software instruction that, when executed, perform the method steps S201-S245, be comprised in a computer program 20.

By way of conclusion, according to the invention, the user - preferably the driver - is provided with a solution offering him or her the ability to in a convenient way confront a vehicle anomaly in a plurality of manners. That is, with the present invention, the user is enabled to in an interactive manner select and subsequently activate a preferred option 9 among a plurality of options 7 to face the anomaly in accordance with personal preferences or the traffic situation at hand.

The present inventive concept has been described above by way of example. Several variants of the present inventive concept are, however, conceivable. For instance, the vehicle anomaly may rather than engine malfunction concern for instance electrical failure or low level of washer fluid. Furthermore, in the exemplary embodiment of the present invention described above, the control unit 4 is represented by commonly known steering wheel control buttons. It would however be possible, and within the scope of the present invention, to use a different type of control unit 4, such as wheels or knobs placed elsewhere within the vehicle.

Furthermore, even though the invention has been described with reference to a specific exemplifying embodiment thereof, many different alterations, modifications and the like will become apparent for those skilled in the art. Variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

## Claims

1. User interface system (1) for allowing a user of a vehicle to actuate an action associated with an anomaly of said vehicle, said user interface system (1) comprising:
- a display unit (2) integrated with an instrument panel (3) of said vehicle, said display unit (2) being arranged to display:
- a predetermined vehicle message (6) as a result of an occurrence of said anomaly; and
- a plurality of predetermined selectable action options (7) related to said vehicle message (6), each action option (7) being associated with a respective action,
and
- a control unit (4) arranged to provide said user with the ability to make a selection (9) of one of said action options (7),
wherein, as a result of detection of said selection (9), the action associated with the selected action option (9) is actuated.

2. User interface system (1) according to claim 1, further comprising a first storage device (11) having stored thereon predetermined additional content associated with said vehicle message (6), wherein one of said respective actions comprises at least:
- retrieving (S221) said additional content from said first storage device (11), and displaying said additional content in said display unit (2).

3. User interface system (1) according to claim 2, wherein said first storage device (11) comprises an interactive vehicle manual (12) or a phone book (13) associated with said vehicle, and wherein said action further comprises:
- deriving said additional content from said interactive vehicle manual (12) or said phone book (13).

4. User interface system (1) according to any one of the preceding claims, further comprising an identifying device (14), wherein one of said respective actions comprises at least:
- identifying (S231), by said identifying device (14), a geographical position of the vehicle; and
- identifying (S233), by said identifying device (14), a vehicle servicing entity (16) based on a distance to said vehicle position as compared to respective distances of possible alternative vehicle servicing entities.

5. User interface system (1) according to claim 4, further comprising a navigation system (15) associated with said vehicle, wherein said action further comprises at least:
- initiating (S235) route guidance to said servicing entity (16) by means of said navigation system (15).

6. User interface system (1) according to claim 4 or 5, wherein said action further comprises at least:
- displaying (S237) a servicing phone number associated with said servicing entity (16) in said display unit (2).

7. User interface system (1) according to any one of claims 4 to 6, further comprising a phone (17) associated with said vehicle, wherein said action further comprises at least:
- initiating (S239) a call to said servicing entity (16) by means of said phone (17).

8. User interface system (1) according to any one of the preceding claims, further comprising a second storage device (18) having stored thereon an assisting phone number of a predetermined vehicle assisting entity (19), wherein one of said respective actions comprises at least:
- retrieving (S241) said assisting phone number from said second storage device (18).

9. User interface system (1) according to claim 8, wherein said second storage device (18) comprises an interactive vehicle manual (12) or a phone book (13) associated with said vehicle, and wherein said action further comprises:
- deriving said assisting phone number from said interactive vehicle manual (12) or said phone book (13).

10. User interface system (1) according to claim 8 or 9, wherein said action further comprises at least:
- displaying (S243) said assisting phone number in said display unit (2).

11. User interface system (1) according to anyone of claims 8 to 10, further comprising a phone (17) associated with said vehicle, wherein said action further comprises at least:
- initiating (S245) a call to said assisting entity (19) by means of said phone (17).

12. User interface system (1) according to any one of the preceding claims, wherein said control unit (4) is integrated in a steering wheel (5) of said vehicle.

13. User interface system (1) according to any one of the preceding claims, wherein said vehicle message (6) and/or said action options (7) are displayed in at least one pop-up window (8).

14. Method for a user interface system (1) allowing a user of a vehicle to actuate an action associated with an anomaly of said vehicle, said user interface system (1) comprising:
- a display unit (2) integrated with an instrument panel (3) of said vehicle; and
- a control unit (4),
said method comprising the steps of:
- displaying (S203), as a result of an occurrence of said anomaly, a predetermined vehicle message (6) in said display unit (2);
- displaying (S205) a plurality of predetermined selectable action options (7) related to said vehicle message (6) in said display unit (2), each action option (7) being associated with a respective action;
- detecting (S207), by means of said control unit (2), a selection (9) initiated by said user of one of said action options (7); and
- actuating (S209) the action associated with the selected action option (9).

15. Computer program (20) comprising software instructions that, when executed, performs the method of claim 14.
